# EUROPEAN PATENT SPECIFICATION

(11) **EP 2 633 980 B1**
(45) Date of publication and mention of the grant of the patent: **19.09.2018**
(21) Application number: 13157299.2
(22) Date of filing: 28.02.2013
(51) Int. Cl.: B29D 11/00

(54) **Method of arranging ring segments on a wafer for functionalized layers of an ophthalmic lens and wafer**
Verfahren zum Anordnen von Ringsegmenten auf einem Wafer für funktionalisierte Schichten einer ophthalmischen Linse und Wafer
Procédé d'agencement de segments annulaires sur une tranche fonctionnalisée d'une lentille ophtalmique et tranche fonctionnalisée

(30) Priority: 28.02.2012 US 201213406627
(43) Date of publication of application: 04.09.2013
(73) Proprietor: Johnson & Johnson Vision Care, Inc., Jacksonville, FL 32256 (US)
(72) Inventor: Pugh, Randall B., Jacksonville, FL Florida 32259 (US); Flitsch, Frederick A., New Windsor, NY New York 12553 (US); Otts, Daniel B., Fruit Cove, FL Florida 32259 (US); Riall, James Daniel, St. Johns, FL Florida 32259 (US); Toner, Adam, Jacksonville, FL Florida 32259 (US)
(74) Representative: Tunstall, Christopher Stephen

(56) References cited:
- EP-A1- 2 631 705
- US-A1- 2010 078 838
- US-A1- 2011 177 675
- US-A1- 2011 281 377

## Description

A functionalized layer insert for an ophthalmic device formed from multiple functional layers which are stacked, as well as, in some examples, various designs for ring segments that comprise the functional layers are described. The invention relates to methods of arranging ring segments on a wafer to optimize wafer utilization.

### BACKGROUND

Traditionally an ophthalmic device, such as a contact lens, an intraocular lens or a punctal plug included a biocompatible device with a corrective, cosmetic or therapeutic quality. A contact lens, for example, can provide one or more of: vision correcting functionality; cosmetic enhancement; and therapeutic effects. Each function is provided by a physical characteristic of the lens. A design incorporating a refractive quality into a lens can provide a vision corrective function. A pigment incorporated into the lens can provide a cosmetic enhancement. An active agent incorporated into a lens can provide a therapeutic functionality. Such physical characteristics are accomplished without the lens entering into an energized state. A punctal plug has traditionally been a passive device.

More recently, it has been theorized that active components may be incorporated into a contact lens. Some components can include semiconductor devices. Some examples have shown semiconductor devices embedded in a contact lens placed upon animal eyes. It has also been described how the active components may be energized and activated in numerous manners within the lens structure itself. The topology and size of the space defined by the lens structure creates a novel and challenging environment for the definition of various functionalities. Generally, such disclosures have included discrete devices. However, the size and power requirements for available discrete devices are not necessarily conducive for inclusion in a device to be worn on a human eye.

US 2010/078838 A1 discloses an ophthalmic lens with an arcuate media insert. US 2011/281377 A1 discloses a method for separating and transferring integrated circuit chips.

### SUMMARY

According to a first and a second aspect of the invention there are provided two methods of generating a layout for optimizing the use of semiconducting material wafer for a die component of an ophthalmic lens according to claim 1 and claim 2.

The radius of the internal arcuate edge may be different than the radius of the external arcuate edge.

The two or more arc segments may be generally of the same shape.

The arc segments of the ring design may be generally positioned in interdigitated columns.

At least a portion of an arc segment may be positioned near the interior arcuate edge of another arc segment.

The intact ring may be divided into two ring segment designs.

The apex of the exterior convex edges of two ring segments placed near the center of the wafer may be facing towards the outside of the wafer.

The intact ring may be divided into three ring segments.

Three segments of the multiple divided intact rings may be positioned near the center of the wafer with concentric circles of arc segments around the three segments of the multiple divided intact rings.

The intact ring may be divided into four ring segment designs.

The columns may be interdigitated with one of the edges of each arc segment.

One or more of the ring segments may include curvature designed to match the external arc of the fully arc-matched ring segment with arc-matched ends.

One or both ends of the one or more segments may include ends designed to the interdigitation of columns of arc segments on a wafer.

According to a third aspect of the invention there is provided a semiconducting wafer according to claim 14.

Accordingly, a functionalized layer insert that can be energized and incorporated into an ophthalmic device is described. The insert can be formed of multiple layers which may have unique functionality for each layer; or alternatively mixed functionality but in multiple layers. The layers may have layers dedicated to the energization of the product or the activation of the product or for control of functional components within the lens body.

The functionalized layer insert may contain a layer in an energized state which is capable of powering a component capable of drawing a current. Components may include, for example, one or more of: a variable optic lens element, and a semiconductor device, which may either be located in the stacked layer insert or otherwise connected to it. Some examples can also include a cast molded silicone hydrogel contact lens with a rigid or formable insert of stacked functionalized layers contained within the ophthalmic lens in a biocompatible fashion.

Accordingly, an ophthalmic lens with a stacked functionalized layer portion as well as various designs for ring segments that comprise the functional layers is described. The arrangement of ring segments on a wafer to optimize wafer utilization is also described. An insert may be formed from multiple layers in various manners and placed in proximity to one, or both of, a first mold part and a second mold part. A reactive monomer mix is placed between the first mold part and the second mold part. The first mold part is positioned proximate to the second mold part thereby forming a lens cavity with the energized substrate insert and at least some of the reactive monomer mix in the lens cavity; the reactive monomer mix is exposed to actinic radiation to form an ophthalmic lens. Lenses may be formed via the control of actinic radiation to which the reactive monomer mixture is exposed.

### DESCRIPTION OF THE DRAWINGS

FIG. 1 illustrates a three dimensional cut section representation of an insert formed of stacked functional layers which is incorporated within an ophthalmic lens mold part.
FIG. 2 illustrates two cross-sectional representations of inserts formed of stacked functional layers incorporated within two different shaped ophthalmic lenses.
FIG. 3 illustrates two cross-sectional representations of inserts formed of stacked functional layers incorporated within ophthalmic lenses with different encapsulation parameters.
FIG. 4 illustrates two cross-sectional representations of inserts formed of stacked functional layers with different layer thicknesses incorporated within ophthalmic lenses.
FIG. 5 illustrates a top down view of a one-quarter arc ring segment created with different inner and outer radii, as well as nesting of ring segments and a full ring composed of ring segments.
FIG. 6 illustrates a top down view of a one-quarter arc ring segment created with matching inner and outer radii, as well as nesting of ring segments and a full ring composed of ring segments.
FIG. 7 illustrates a top down view of a one-quarter arc ring segment created with partial matching of inner and outer radii, as well as nesting of ring segments and a full ring composed of ring segments.
FIG. 8 illustrates a top down view of various ring segment shapes from Figs. 5-7 for comparison purposes.
FIG. 9 illustrates a top down view of a 20.32-centimetre (eight-inch) wafer with one-half arc ring segments arranged in concentric bands according to an aspect of the present invention.
FIG. 10 illustrates a top down view of a 20.32-centimetre (eight-inch) wafer with one-half arc ring segments arranged in a nested layout including nine concentric bands according to an aspect of the present invention.
FIG. 11 illustrates a top down view of a 20.32-centimetre (eight-inch) wafer with one-third arc ring segments arranged in a nested layout including ten concentric bands according to an aspect of the present invention.
FIG. 12 illustrates a top down view of a segment of a 20.32-centimetre (eight-inch) wafer with one-quarter arc matched ring segments arranged in a linear layout according an aspect of the present invention.
FIG 13A illustrates a top down view of a segment of a 20.32-centimetre (eight-inch) wafer with one-quarter arc matched ring segments including arc matched ends arranged in a linear staggered layout according to an aspect of the present invention.
Fig. 13B illustrates a close-up top down view of a segment of a 20.32-centimetre (eight-inch) wafer with one-quarter arc matched ring segments including arc matched ends arranged in a linear staggered layout according to an aspect of the present invention.

### DETAILED DESCRIPTION

The present disclosure includes a substrate insert device formed through the stacking of multiple functionalized layers. The invention includes arrangement and design of ring segments on a wafer to optimize wafer utilization. Said segments which can be used for functionalized layers in a functional layer insert, for incorporation into an ophthalmic lens.

In the following sections detailed descriptions of example embodiments of the invention will be given. The description of both preferred and alternative embodiments are example embodiments only, and it is understood that to those skilled in the art that variations, modifications and alterations may be apparent. It is therefore to be understood that said example embodiments do not limit the scope of the invention.

### Glossary

In this description and claims directed to the presented invention, various terms may be used for which the following definitions will apply:
Active Lens Insert: as used herein refers to an electronic or electromechanical device with controls based upon logic circuits.

Arc-matched (or arc matching): as used herein refers to the design of a Ring Segment which includes an identical External Radius and Internal Radius, such that the curvature of the External Arc matches the curvature of the Internal Arc. Arc matching is used to efficiently nest Ring Segments on a Wafer, maximizing wafer utilization.

Dicing Street Width: as used herein refers to the width of a thin non-functional space between integrated circuits on a Wafer, where a saw or other device or method can safely cut the Wafer into individual Die without damaging the circuits.

Die: as used herein refers to a block of semiconducting material, on which a given functional circuit is fabricated. Die are created on and cut from a Wafer.

Energized: as used herein refers to the state of being able to supply electrical current to or to have electrical energy stored within.

Energy: as used herein refers to the capacity of a physical system to do work. Many uses may relate to the said capacity being able to perform electrical actions in doing work.

Energy Source: as used herein refers to device capable of supplying Energy or placing a biomedical device in an Energized state.

External Arc: as used herein refers to the external or convex edge of a Ring Segment, which is a portion of the circumference of the circle defined by the External Radius.

External Radius: as used herein refers to the radius of the circle that defines the external edge of a Full Ring or Ring Segment. The External Radius determines the curvature of the External Arc.

Full Ring: as used herein refers to one complete ring-shaped layer in a Functionalized Layer Insert. A Full Ring may be comprised of multiple Ring Segments or may be one Intact Ring.

Functionalized: as used herein refers to making a layer or device able to perform a function including for example one or more of; energization, activation, control, and logical processing of digital signals or data.

Functionalized Layer Insert: as used herein refers to an insert for an ophthalmic device formed from multiple functional layers which at least a portion of them are stacked. The multiple layers may have unique functionality for each layer; or alternatively mixed functionality but in multiple layers. Preferably, the layers can be rings.

Intact Ring: as used herein refers to one complete ring-shaped layer in a Functionalized Layer Insert which is made of a single intact Die.

Internal Arc: as used herein refers to the internal or concave edge of a Ring Segment. The Internal Arc may be a single arc segment, the curvature of which is determined by the Internal Radius. The Internal Arc may be comprised of multiple arc segments of different curvatures, defined by different Internal Radii.

Internal Radius: as used herein refers to the radius of the circle that defines the internal edge or a portion of the internal edge of a Full Ring or Ring Segment. The Internal Radius determines the curvature of the Internal Arc.

Lens: refers to any ophthalmic device that resides in or on the eye. These devices can provide optical correction or may be cosmetic. For example, the term lens can refer to a contact lens, intraocular lens, overlay lens, ocular insert, optical insert or other similar device through which vision is corrected or modified, or through which eye physiology is cosmetically enhanced (e.g. iris color) without impeding vision. Preferred lenses are soft contact lenses are made from silicone elastomers or hydrogels, which include but are not limited to silicone hydrogels, and fluorohydrogels.

Mold: refers to a rigid or semi-rigid object that may be used to form lenses from uncured formulations. Some preferred molds include two mold parts forming a front curve mold part and a back curve mold part.

Power: as used herein refers to work done or energy transferred per unit of time.

Ring Segment: as used herein refers to one Die which may be combined with other Die to construct a Full Ring. As used herein, a Ring Segment is generally flat and is formed in an arcuate shape.

Stacked: as used herein means to place at least two component layers in proximity to each other such that at least a portion of one surface of one of the layers contacts a first surface of a second layer. A film, whether for adhesion or other functions may reside between the two layers that are in contact with each other through said film.

Substrate insert: as used herein refers to a formable or rigid substrate capable of supporting an Energy Source within an ophthalmic lens. The Substrate insert may also support one or more components.

Wafer: as used herein refers to a thin slice of semiconductor material, such as silicon crystal, used in the fabrication of integrated circuits and other microdevices. The wafer serves as the substrate for microelectronic devices built in and over the wafer and undergoes many micro fabrication process steps.

### Apparatus

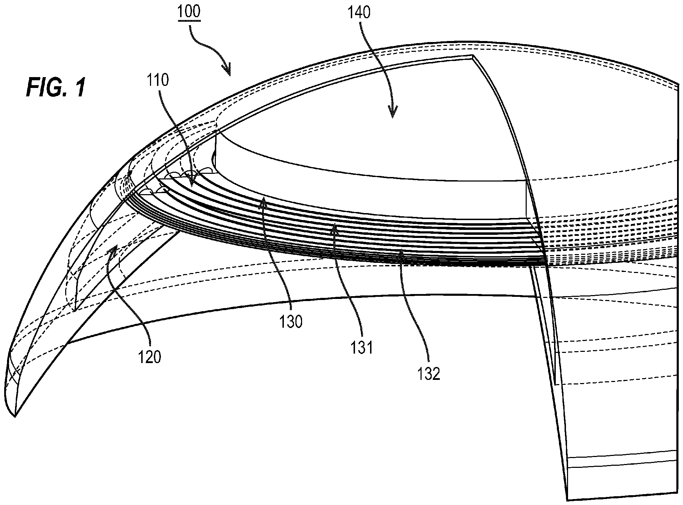

Referring now to Fig. 1, demonstrated as item 100 is a three dimensional representation of a fully formed ophthalmic lens using a stacked layer substrate insert formed as a functionalized layer insert 110. The representation shows a partial cut out from the ophthalmic lens to realize the different layers present inside the device. A body material 120 is shown in cross section of the encapsulating layers of the substrate insert. The body material 120 is contained fully within and extends around the entire circumference of the ophthalmic lens. It may be clear to one skilled in the arts that the actual functionalize layer insert 110 may comprise a full annular ring or other shapes that still may reside within the constraints of the size of a typical ophthalmic lens.

Layers 130, 131 and 132 illustrate three of numerous layers that may be found in a functionalized layer insert 110. A single layer may include one or more of: active and passive components and portions with structural, electrical or physical properties conducive to a particular purpose.

A layer 130 may include an energization source, such as, for example, one or more of: a battery, a capacitor and a receiver within the layer 130. Item 131 then, in a non limiting exemplary sense, may comprise microcircuitry in a layer that detects actuation signals for an active lens insert 140. A power regulation layer 132, may be included that is capable of receiving power from external sources, charging the battery layer 130 and controlling the use of battery power from layer 130 when the lens is not in a charging environment. The power regulation layer 132 may also control signals to an exemplary active lens insert 140 in the center annular cutout of the functionalized layer insert 110.

In general, a functionalized layer insert 110 is embodied within an ophthalmic lens via automation which places an energy source a desired location relative to a mold part used to fashion the lens.

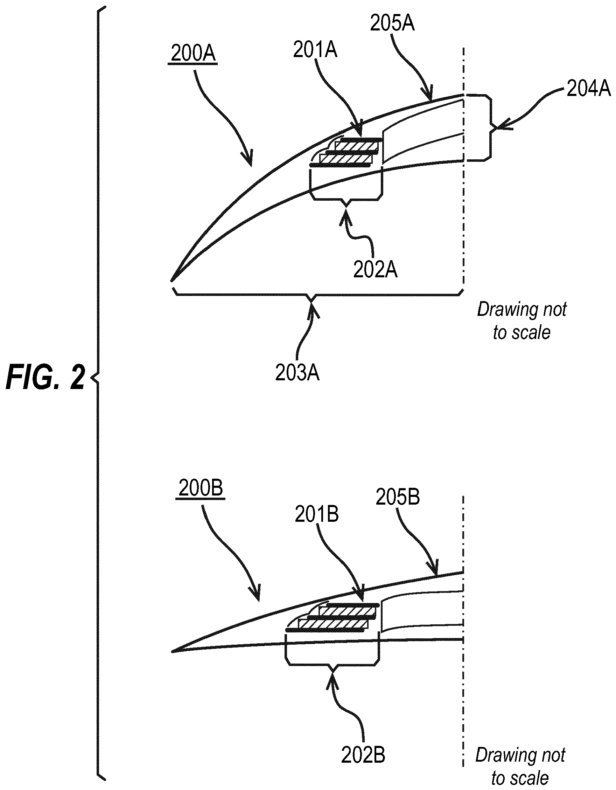

The size, shape, and stacking structure of the die that may be used to form layers such as 130, 131 and 132 in a functionalized layer insert 110 is influenced by several factors, as shown in Figs. 2, 3 and 4.

Fig. 2 illustrates the effect of lens shape on the design of a functionalized layer insert. The base curve, diameter, and thickness of an ophthalmic lens define a maximum size and shape of an included functionalized layer insert. Fig. 2 shows, as one example, the impact of different base curves. Item 200A depicts a cross sectional view of a portion of an ophthalmic lens 205A with more curvature than the ophthalmic lens 205B, depicted in item 200B, which is flatter. The flatter lens 205B can accommodate a functionalized layer insert 201B of greater width 202B, as compared to the narrower width 202A of a functionalized layer insert 201A that fits within lens 205A having greater base curvature. It should be apparent that a lens of smaller diameter (203A indicates a lens diameter) would limit the width of a functionalized layer insert while a lens with larger diameter would accommodate a wider functionalized layer insert. Likewise, a lens of less thickness (204A indicates a lens thickness) would limit the number of layers in a functionalized layer insert as well as the width of a functionalized layer insert, while a thicker lens might support more layers and layers of greater width.

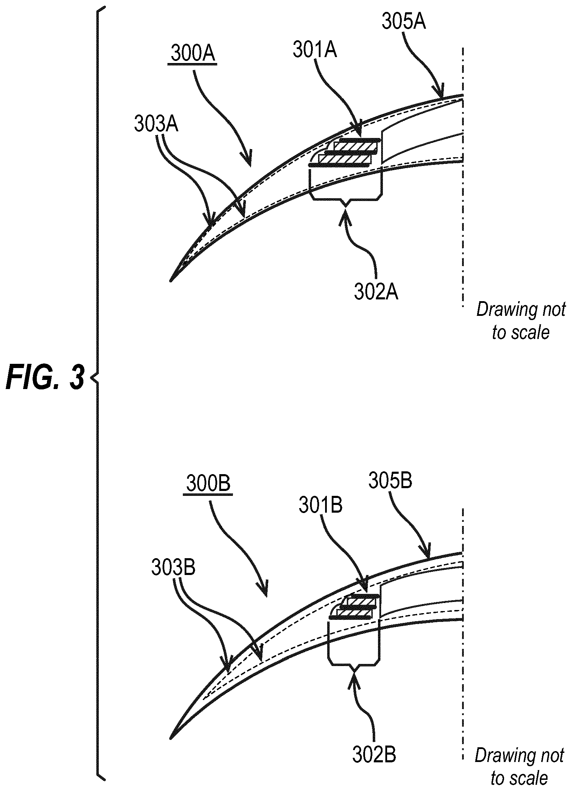

Fig. 3 illustrates the effect of encapsulation parameters on the design of a functionalized layer insert. Encapsulation parameters, such as, by way of non-limiting example, maintaining a minimum 100 um thickness between the edge of a die and the outer edge of a lens, affect the size and shape of a functionalized layer insert and therefore the size and shape of individual layers. Item 300A depicts a cross-sectional view of a portion of an ophthalmic lens 305A with a functionalized layer insert 301A and encapsulation boundary 303A. The ophthalmic lens 305B depicted in item 300B includes a functionalized layer insert 301B and a relatively wider encapsulation boundary 303B as compared to boundary 303A which is narrower. It can be seen that the wider encapsulation boundary 303B necessitates that the functionalized layer insert 301B be narrower in width 302B as compared to the functionalized layer insert 301A with width 302A.

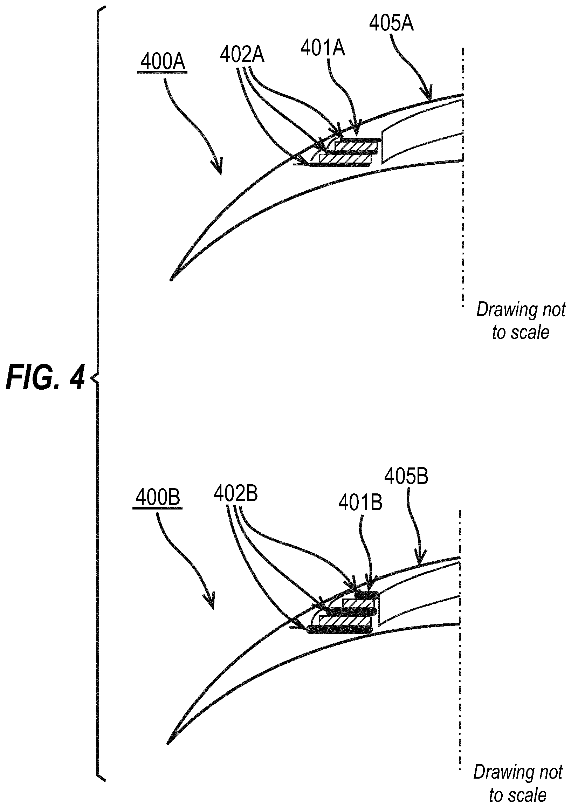

Depicted in Fig. 4 is the effect of functional layer thickness on the design of a functionalized layer insert. Item 400A represents a cross-sectional view of a portion of an ophthalmic lens 405A with a functionalized layer insert 401A including three layers with material, such as, for example, insulating layers, between the functional layers. A functionalized layer insert may contain more or less than three layers. The ophthalmic lens 405B depicted in item 400B includes a functionalized layer insert 401B with relatively thicker layers 402B as compared to the layers 402A in the functionalized layer insert 401A which are thinner. The lens curvature in these two examples allows the width of the bottom layers 402A and 402B to remain the same. However, it can be seen that the increased height of the functionalized layer insert 401B as compared to 401A, combined with the lens curvature, causes the top layer 402A to be limited in width. The thickness of each functional layer impacts other dimensions, such as functional layer width, that will fit within the required lens and encapsulation parameters. Thicker layers within the functionalized layer insert will be more restricted in other dimensions, such as width, in order to remain within the confines of the lens geometry.

### Ring Segment Design

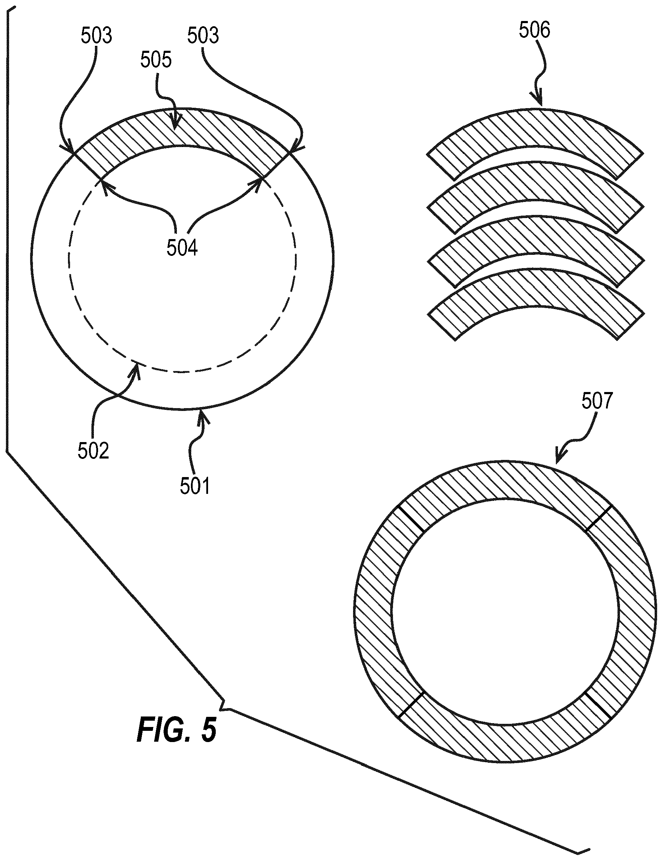

In the examples depicted, each layer within a functionalized layer insert is in the shape of a ring formed with multiple ring segments. Ring segments are manufactured on wafers, from which they are subsequently cut. Ring segments allow significantly more efficient use of wafer material than full rings, with some ring segment designs more efficient than others, as will be demonstrated in Figs. 5 -8. Therefore, the decision to produce an intact ring versus a ring composed of multiple ring segments may be based, in part, on the costs of the die substrate and manufacturing processes. Other factors in the decision between intact rings versus multiple ring segments include the functions to be performed on a specific layer within the functionalized layer insert and the advantage of structural stability provided when one or more intact rings are included in a functionalized layer insert. One example of a function that may require a full ring is a radio frequency antennae positioned around the full circumference of a die. Another example is an interconnect layer used to route signals between ring segments below it and ring segments above it, wherein the connections need to span different locations around the circumference of the functionalized layer insert.

Factors contributing to die cost may include, by way of non-limiting example, the cost of the substrate material and the number of steps, and therefore the time cost, associated with the fabrication process. Die created on an inexpensive substrate, such as, for example, ceramic or Kapton, with relatively minimal fabrication steps may be produced in a less efficient layout such as full rings. Full rings result in significant waste of wafer material, but low cost material and fabrication may make production of full rings feasible for some layers within a functionalized layer insert. Alternatively, die created on an expensive substrate, such as, for example, silicon, with relatively more complex fabrication effort including many steps and details, may be architected in multiple ring segments such that the number of rings created from a single wafer is optimized. Figs. 5-13B will show that specific ring segment designs and their layout on a wafer significantly optimize the number of rings that can be produced from a single wafer.

Other factors are considered when optimizing the layout of die on wafers. For example, photo etching of die, if necessary as part of the fabrication method, is a process typically performed in rectangular blocks on a wafer. When photo etching is required, a linear layout of ring segments is more efficient than a radial layout. Dicing street width, the non-functional space between die on a wafer, affects optimization and layout. Dicing street width may be determined, for example, by the specific technology or tools used to cut the die from the wafer at the end of the manufacturing process. Edge offset is another parameter affecting die layout. Edge offset is the minimum distance between the edge of a die and the outer edge of a wafer.

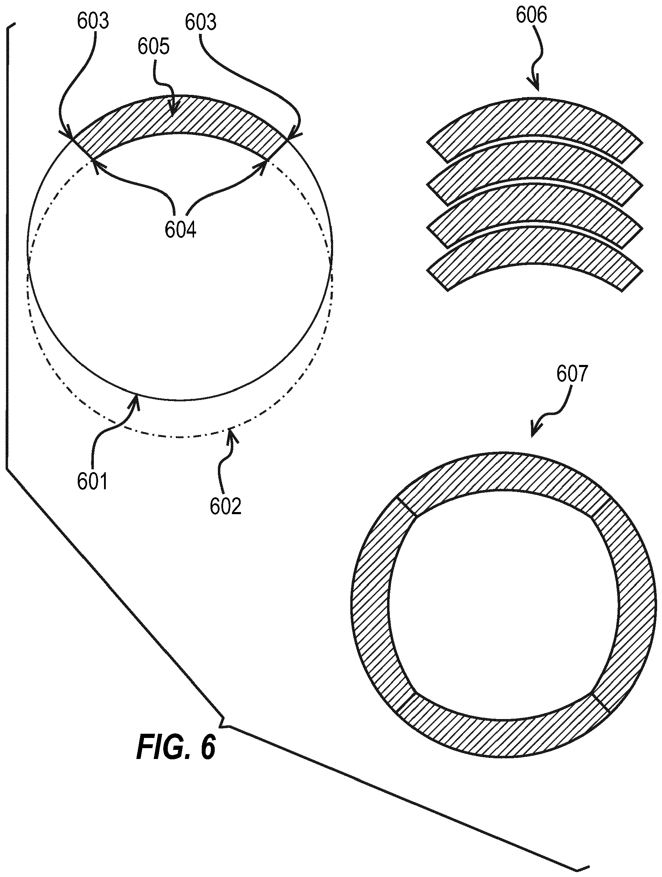

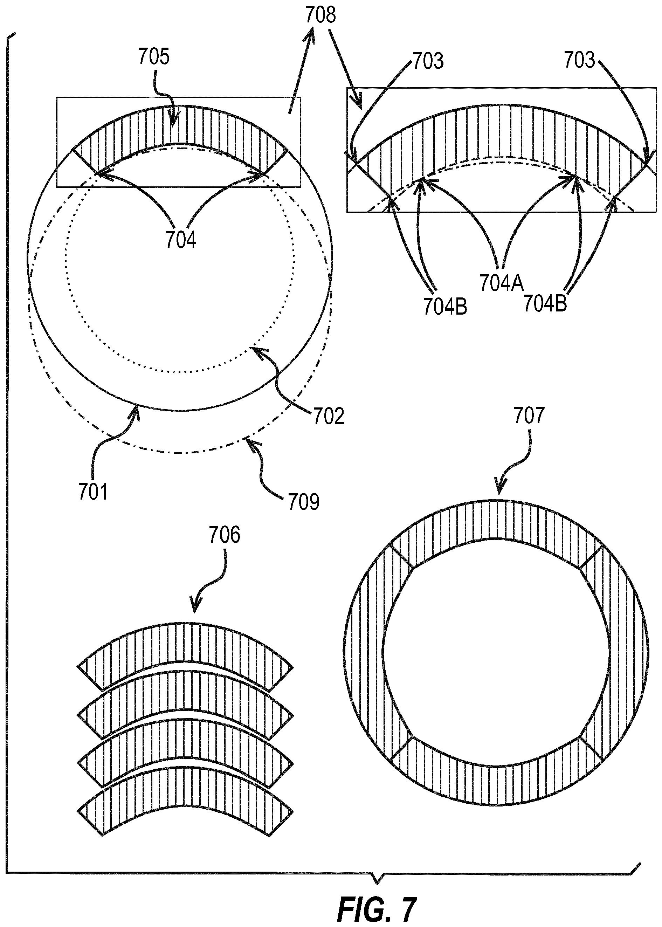

When designing the layout of ring segments on a wafer, the shape of each individual ring segment significantly impacts optimization of wafer utilization. Ring segment design may be grouped into three general categories: no arc matching (Fig. 5), full arc matching (Fig. 6), and partial arc matching (Fig. 7). Different ring segment designs may be combined within one layer of a functionalized layer insert, as well as in different layers of a functionalized layer insert.

Referring now to Fig. 5, depicted is an example of ring segments designed with no arc matching, showing one-quarter ring segments created with different interior and exterior radii. The external radius defined by circle 501 is greater than the internal radius defined by circle 502, and therefore external arc 503 has less curvature than internal arc 504. Ring segment 505 therefore has different internal and external radii. Item 506 demonstrates that ring segments 505 do not nest efficiently, with significant gaps between the individual die, which results in waste when producing die on a wafer. Item 507 reveals that four ring segments 505 may be combined to produce a full ring with a circular interior edge.

Referring now to Fig. 6, an example of full arc matching is shown including one-quarter ring segments created with identical interior and exterior radii. The external radius defined by circle 601 is identical to the internal radius defined by circle 602, which is offset rather than reduced in size to define the shape of ring segment 605. Therefore external arc 603 and internal arc 604 have identical curvature. It is shown in item 606 that ring segments 605 can be precisely nested, leaving only a small dicing street width required for cutting the individual die 605 from the wafer. This design significantly minimizes waste when producing die on a wafer. A full ring composed of four ring segments 605 is depicted in item 607. Since the full arc matching design results in die 605 that are slightly tapered on the ends, the interior edge of the resulting ring in item 607 is not perfectly circular.

Referring now to Fig. 7, a partial arc matching design is depicted with one-quarter ring segments created with a combination of three curvatures. Item 708 provides a close up view of the elements defining the shape of ring segment 705. In item 708, the outline has been removed from ring segment 705 so that the defining shapes may be more clearly seen. The curvature of external arc 703 is determined by the radius of circle 701. Internal arc 704 is comprised of two different curvatures. Circle 702, denoted with a dashed line, has a smaller radius than circle 701 and defines the center portion 704A of the internal arc 704. Circle 709, denoted with an alternating dash-dot line, has a radius identical to circle 701. Circle 709 is positioned such that it intersects circle 702 towards the ends of ring segment 705. Circle 709 therefore defines the curvature of the two end portions 704B of the internal arc 704. This hybrid design for internal arc 704 maximizes the active area available on the die while including partial arc matching near the ends of ring segment 705 to improve nesting and therefore efficiency of die layout on a wafer. Item 706 shows the nesting of ring segments 705, wherein the identical radii of circles 701 and 709 in the design of ring segments 705 provide for close nesting alignment at the ends of the die. Item 707 shows a full ring composed of four ring segments 705. The design of die 705 includes tapered ends, resulting in a ring with an interior edge which is not perfectly circular, shown in item 707.

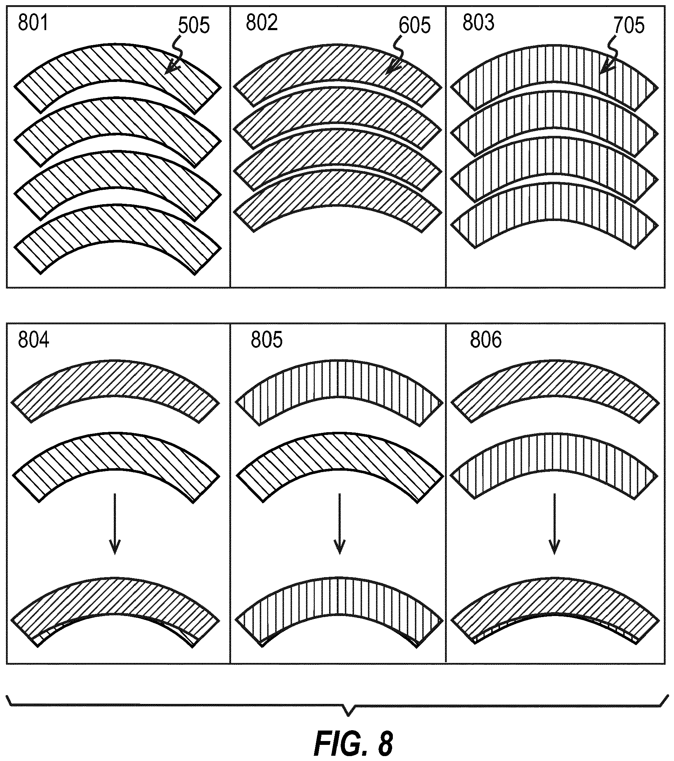

Referring now to Fig. 8, a comparison of the ring segments described in Figs. 5-7 is shown. Item 801 shows the nesting of ring segments 505 created with no arc matching. Item 802, likewise depicts nesting of full arc-matched ring segments 605, and item 803, partial arc-matched ring segments 705. Item 802 clearly shows optimal nesting of full arc-matched ring segments 605. It is also evident from item 803 that partial arc-matched ring segments 705 nest more efficiently than ring segments 505 with no arc matching.

Item 804 compares the area of fully arc-matched ring segment 605 with ring segment 505, designed with no arc matching. When 605 is overlaid upon 505, it can be seen that 605 has tapered ends, reducing the surface area available on the fully arc-matched die 605. Although full arc matching supports the most efficient layout of ring segments on a wafer, it does so at the cost of less surface area on each ring segment.

Item 805 similarly compares the area of partially arc-matched ring segment 705 with ring segment 505, designed with no arc matching. When 705 is overlaid upon 505, it is again evident that 705 has tapered ends, but less than seen in the comparison of item 804. The surface area available on the partially arc-matched ring segment 705 is somewhat reduced as compared to ring segment 505 with no arc matching.

Finally, item 806 compares fully arc-matched ring segment 605 with partially arc-matched ring segment 705. Although both have tapered ends, when 605 is overlaid upon 705 it is shown that partially arc-matched ring segment 705 has a slightly greater surface area. Partial arc matching is a hybrid solution which preserves more surface area on a ring segment while adjusting the curvature near the ends of the ring segment for improved nesting in the layout of ring segments on a wafer. Partial arc matching may be used, by way of non-limiting example, to create battery die where the active area for the battery is not sacrificed but the ring segment ends are slightly narrowed, improving manufacturing efficiency without impacting functionality.

### Wafer Optimization

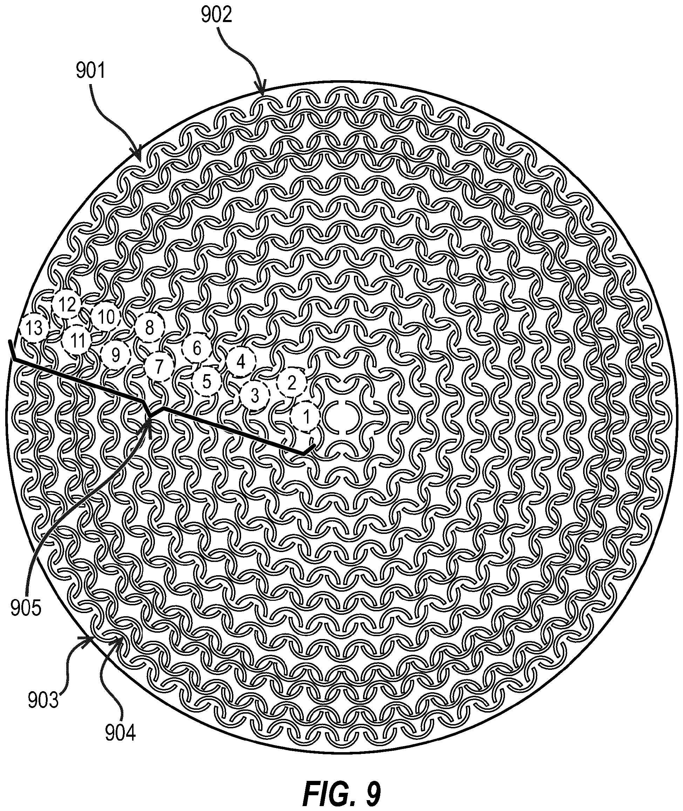

Referring now to Fig. 9, a top-down view of a 20.32-centimetre (8-inch) wafer 901 is depicted with one-half ring segments 902 arranged in concentric bands 905. The design of this layout includes thirteen concentric bands 905, numbered 1-13, each consisting of a double row of one-half ring segments 902. The center of the wafer allows space for two additional half-ring segments 902 which are not included in a concentric band 905. The outer row of ring segments 902 in each band 905 has ring segments 902 positioned with their external arc toward the outer edge of the wafer 901 and the ends of the ring segments 902 toward the center of the wafer 901. One-half ring segment 903 is an example of an outer row ring segment within band number 13, the outermost band on the wafer 901. The inner row of ring segments 902 in each band 905 includes ring segments 902 positioned with their external arc toward the center of the wafer 901, the ends of the ring segments 902 pointing toward the outer edge of the wafer 901, and each end of the ring segments 902 placed near the internal arcs of two adjacent ring segments 902 contained in the outer row of the same band 905. One-half ring segment 904 is an example of an inner row ring segment within band number 13, the outermost band on the wafer 901, one end of which is placed near the internal arc of one-half ring segment 903. Separation is maintained between the ring segments 902 within a band 905 and between bands 905 for dicing street width. This layout on a 20.32-centimetre (8-inch) wafer 901 yields 406 full rings from 812 one-half ring segments 902, and utilizes 40.7% of the wafer material.

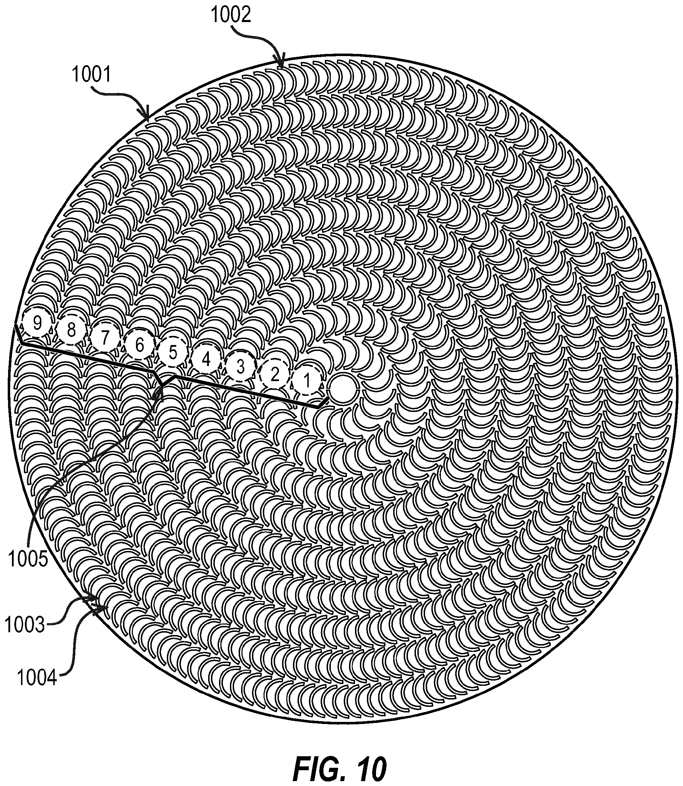

Referring now to Fig. 10, shown is a top-down view of a 20.32-centimetre (8-inch) wafer 1001 with one-half ring segments 1002 arranged in a nested layout including nine concentric bands 1005, numbered 1-9. The center of the wafer 1001 allows space for two additional half-ring segments 1002 which are not included in a band 1005. Each of the nine bands 1005 includes a single row of one-half ring segments 1002, with one end of the ring segment 1002 toward the outer edge of the wafer 1001 and the other end of the ring segment 1002 toward the center of the wafer 1001, and with the external arc of each ring segment 1002 nested near the internal arc of an adjacent ring segment within the same band 1005. For example, one-half ring segment 1004 in band number 9 is nested such that its external arc is near the internal arc of adjacent one-half ring segment 1003. Separation is maintained between the ring segments 1002 within a single band 1005 and between adjacent bands 1005 so that the ring segments 1002 may be diced from the wafer 1001. The one-half ring segment design depicted in Fig. 10 provides 428 full rings from 856 one-half ring segments 1002, with wafer utilization of 42.9%.

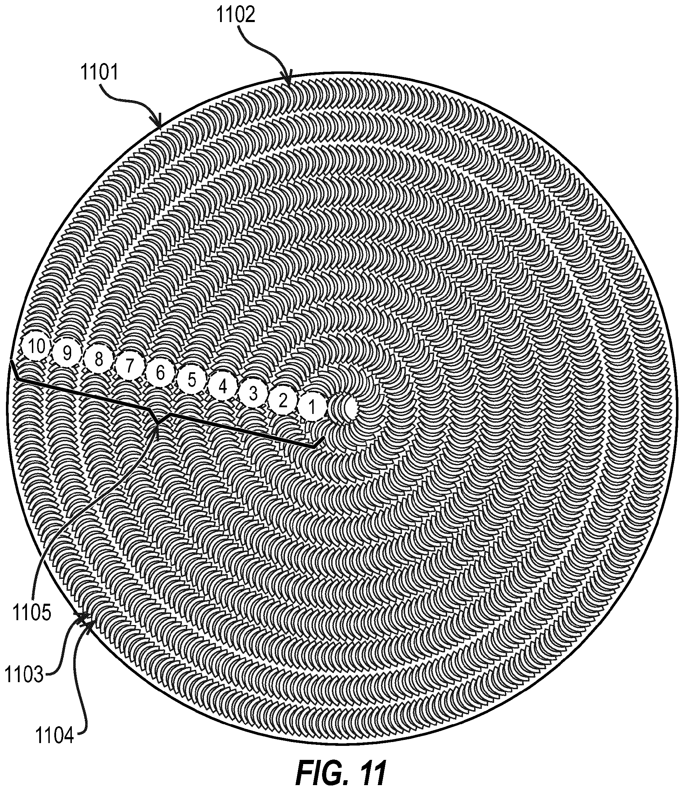

Referring now to Fig. 11, a 20.32-centimetre (8-inch) wafer 1101 is depicted in a top-down view with one-third ring segments 1102 arranged in a nested layout including ten concentric bands 1105, numbered 1-10. The center of the wafer 1101 allows space for three additional one-third ring segments 1002 which are not included in a concentric band 1105. Each of the ten bands 1005 includes a single row of one-third ring segments 1102, with one end of the one-third ring segment 1102 toward the outer edge of the wafer 1101 and the other end of the one-third ring segment 1102 toward the center of the wafer 1101, and with the external arc of each one-third ring segment 1102 nested within the internal arc of an adjacent one-third ring segment 1102 within the same band 1105. Provided as an example is one-third ring segment 1104 in band number 10 nested so that its external arc is near the internal arc of one-third ring segment 1103. Separation is maintained between the one-third ring segments 1102 within a single band 1105 as well as between adjacent bands 1105 to allow dicing from the wafer 1101. It can be seen by comparing Figs. 10 and 11 that one-third ring segments 1102 nest more efficiently than one-half ring segments 1002. Although creation of a full ring requires three one-third ring segments 1102, as opposed to only two one-half ring segments 1002, the more efficient nesting of the one-third ring segments 1102 results in increased full ring yield from a single wafer 1101. The one-third ring segment design of Fig. 11 yields 517 full rings from 1,553 one-third ring segments 1102, utilizing 51.6% of the wafer.

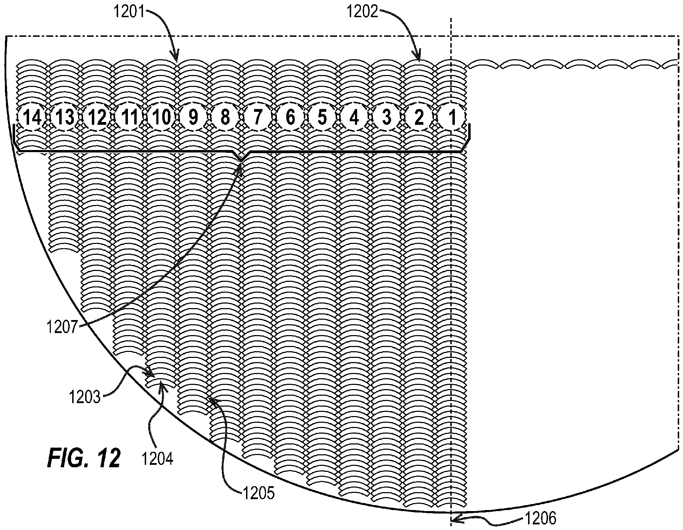

Referring now to Fig. 12, depicted is a top-down view of a portion of a 20.32-centimetre (8-inch) wafer 1201. A center line of the wafer 1201 is illustrated by a dotted line 1206 in the figure. Approximately one-quarter of the wafer 1201 is populated with fully arc-matched one-quarter ring segments 1202 arranged in a nested layout including fourteen columns 1207, numbered 1-14. Each of the fourteen columns 1207 includes fully arc-matched one-quarter ring segments 1202, the external arc of which is nested within the internal arc of an adjacent fully arc-matched one-quarter ring segment 1202 within the same column 1207. Provided as an example is fully arc-matched one-quarter ring segment 1204 in column number 10 nested so that its external arc is near the internal arc of fully arc-matched one-quarter ring segment 1203. The columns 1207 are positioned such that the ends of the external arcs of fully arc-matched one-quarter ring segments 1202 in one column 1207 are nearly touching the ends of the external arcs of fully arc-matched one-quarter ring segments 1202 in an adjacent column 1207, leaving generally diamond shaped areas 1205 of unused wafer 1201. Separation is maintained between the fully arc-matched one-quarter ring segments 1202 within a single column 1207 as well as between adjacent columns 1207 to allow dicing from the wafer 1201. It should be noted that a full 20.32-centimetre (8-inch) wafer would include nearly four times as many fully arc-matched one-quarter ring segments 1202 as are depicted on the partial wafer 1201 of Fig. 12 which is not shown fully populated. The optimization provided by this layout on a full 20.32-centimetre (8-inch) wafer 1201 results in 851 full rings, made from 3,405 fully arc-matched one-quarter ring segments 1202, with wafer utilization at 78.6%.

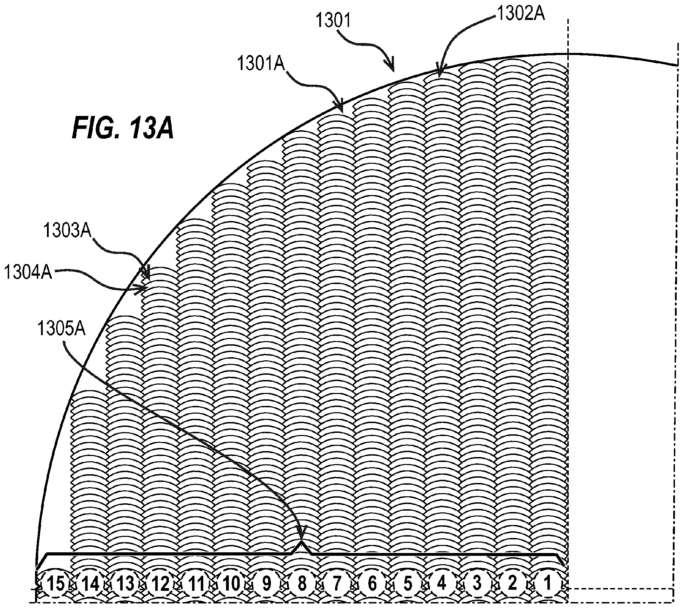

Referring now to Fig. 13A, a top-down view of a portion of a 20.32-centimetre (8-inch) wafer 1301A is shown. In this example, approximately one-quarter of the wafer 1301A is populated with fully arc-matched one-quarter ring segments with arc-matched ends 1302A arranged in a nested layout including fifteen interdigitated columns 1305A, numbered 1-15. Each of the fifteen columns 1305A includes fully arc-matched one-quarter ring segments with arc-matched ends 1302A the external arc of which is nested within the internal arc of an adjacent fully arc-matched one-quarter ring segment with arc-matched ends 1302A within the same column 1305A. Provided as an example is fully arc-matched one-quarter ring segment with arc-matched ends 1304A in column number 12 nested so that its external arc is near the internal arc of adjacent fully arc-matched one-quarter ring segment with arc-matched ends 1303A. The columns 1305A are interdigitated such that the ends of the external arcs of fully arc-matched one-quarter ring segments with arc-matched ends 1302A in one column 1305A align with the ends of the internal arcs of fully arc-matched one-quarter ring segments with arc-matched ends 1302A in adjacent columns 1305A, eliminating the unused area depicted in Fig. 12 as generally diamond shaped areas 1205 of unused wafer 1201. Separation is maintained between the fully arc-matched one-quarter ring segments with arc-matched ends 1302A within a single column 1305A as well as between columns 1305A to allow dicing from the wafer 1301A. It should be noted that a full 20.32-centimetre (8-inch) wafer would include nearly four times as many fully arc-matched one-quarter ring segments with arc-matched ends 1302A as are depicted on the partial wafer 1301 of Fig. 13A which is not shown fully populated. From the 3,732 fully arc-matched one-quarter ring segments with arc-matched ends 1302A in this layout, 933 full rings can be produced. Utilization of 87.1% is achieved on the wafer with this design.

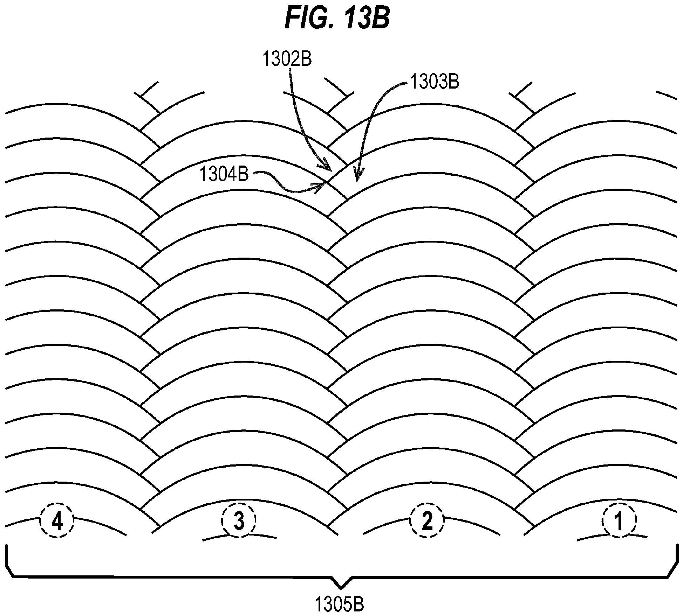

Referring now to Fig. 13B, a close up view of a section of Fig. 13A is provided to show the precise nesting of fully arc-matched one-quarter ring segments with arc-matched ends 1302B. The depiction in Fig. 13B provides a clearer examination of the design in which the end of an external arc of a fully arc-matched one-quarter ring segment with arc-matched ends 1303B in column 1305B number 2 aligns with the end of an internal arc of a fully arc-matched one-quarter ring segment with arc-matched ends 1302B in adjacent column 1305B number 3, the alignment occurring at alignment point 1304B. The interdigitated column layout allows the end of fully arc-matched one-quarter ring segment with arc-matched ends 1302B to align with a portion of the external arc of fully arc-matched one-quarter ring segment with arc-matched ends 1303B. Therefore, to optimize nesting and most efficiently use space on a wafer, the ends of the fully arc-matched one-quarter ring segments with arc-matched ends 1302B include curvature specifically designed to match the external arc of the fully arc-matched one-quarter ring segment with arc-matched ends.

Although Figs. 9-13B show ring segments which are one-half, one-third, and one-quarter rings, similar approaches may be used for rings which are segmented in different denominations in order to optimize wafer utilization.

A method of optimizing the use of semiconducting material wafer for a die component of an ophthalmic lens, the method comprising: dividing intact ring designs into two or more arc segments, wherein at least a portion of each arc segment comprises an internal arcuate edge and an external arcuate edge; arranging the arc segments proximate to each other on a semiconducting material wafer, and providing a dicing street width between the arc segments.

In so far as embodiments described above are implemented, at least in part, using software-controlled data processing apparatus, it will be appreciated that a computer program providing such software control and a transmission, storage or other medium by which such a computer program is provided are envisaged as aspects of the present disclosure.

### Conclusion

As described above and as further defined by the claims below, various designs for ring segments that make up the functionalized layers in a functional layer insert, for incorporation into an ophthalmic lens are provided. The arrangement of ring segments on a wafer to optimize wafer utilization is also described.

## Claims

1. A method of generating a layout for optimizing the use of semiconducting material wafer (901) for a die component of an ophthalmic lens, the method comprising:
dividing intact ring designs of die components into two or more arc segments (902), wherein at least a portion of each arc segment comprises an internal arcuate edge and an external arcuate edge;
generating the layout for the semiconducting material wafer by arranging the arc segments proximate to each other,
providing a dicing street width between the arc segments;
wherein multiple of the two or more arc segments of the ring design are generally positioned in concentric bands; and wherein the internal arcuate edge and the external arcuate edge of each arc segment are arc matched.

2. A method of generating a layout for optimizing the use of semiconducting material wafer (1201) for a die component of an ophthalmic lens, the method comprising:
dividing intact ring designs of die components into two or more arc segments (1202), wherein at least a portion of each arc segment comprises an internal arcuate edge and an external arcuate edge;
generating the layout for the semiconducting material wafer by arranging the arc segments proximate to each other,
providing a dicing street width between the arc segments;
wherein the two or more arc segments of the ring design are generally positioned in columns (1207); and wherein the internal arcuate edge and the external arcuate edge of each arc segment are arc matched.

3. The method of any one of Claims 1 or 2, wherein the two or more arc segments are generally of the same shape.

4. The method of any one of Claims 2 or 3 when dependent on claim 2, wherein the arc segments of the ring design are generally positioned in interdigitated columns (1305A).

5. The method of any preceding claim, wherein at least a portion of an arc segment is positioned near the interior arcuate edge of another arc segment.

6. The method of any preceding claim, wherein the intact ring is divided into two ring segment designs.

7. The method of Claim 6 when dependent on claim 1, wherein the apex of the exterior convex edges of two ring segments placed near the center of the wafer are facing towards the outside of the wafer.

8. The method of Claim 1, wherein the intact ring is divided into three ring segments.

9. The method of Claim 8, wherein three segments of the multiple divided intact rings are positioned near the center of the wafer with concentric circles of arc segments around the three segments of the multiple divided intact rings.

10. The method of Claim 1, wherein the intact ring is divided into four ring segment designs.

11. The method of Claim 2, wherein the columns are interdigitated with one of the edges of each arc segment.

12. The method of any preceding claim, wherein one or more of the ring segments include curvature designed to match the external arc of the fully arc-matched ring segment with arc-matched ends.

13. The method of Claim 2, wherein one or both ends of the one or more segments include ends designed to allow interdigitation of columns of arc segments on a wafer.

14. A semiconducting wafer (901, 1201) comprising:
a layout of arc segments (902, 1202) proximate to each other on the semiconducting wafer, wherein at least a portion of each arc segment comprises an internal arcuate edge and an external arcuate edge and wherein two or more arc segments form a ring die component; and
wherein the layout comprises a dicing street width between the arc segments;
wherein multiple of the two or more arc segments of the ring design are generally positioned in concentric bands (905) or wherein the two or more arc segments of the ring design are generally positioned in columns (1207); and wherein the internal arcuate edge and the external arcuate edge of each arc segment are arc matched.

## Patentansprüche

1. Verfahren zum Erzeugen eines Aufbaus zum Optimieren des Gebrauchs eines Halbleitermaterialwafers (901) für eine Plättchenkomponente einer ophthalmischen Linse, das Verfahren aufweisend:
Aufteilen von intakten Ringgestaltungen von Plättchenkomponenten in zwei oder mehr Bogensegmente (902), wobei mindestens ein Abschnitt von jedem Bogensegment eine bogenförmige Innenkante und eine bogenförmige Außenkante aufweist;
Erzeugen des Aufbaus für den Halbleitermaterialwafer durch Anordnen der Bogensegmente nahe aneinander,
Vorsehen einer Sägelinienbreite zwischen den Bogensegmenten;
wobei mehrere der zwei oder mehr Bogensegmente der Ringgestaltung im Allgemeinen in konzentrischen Bändern angeordnet werden; und wobei die bogenförmige Innenkante und die bogenförmige Außenkante von jedem Bogensegment bogenförmig zusammengepasst werden.

2. Verfahren zum Erzeugen eines Aufbaus zum Optimieren des Gebrauchs eines Halbleitermaterialwafers (1201) für eine Plättchenkomponente einer ophthalmischen Linse, das Verfahren aufweisend:
Aufteilen von intakten Ringgestaltungen von Plättchenkomponenten in zwei oder mehr Bogensegmente (1202), wobei mindestens ein Abschnitt von jedem Bogensegment eine bogenförmige Innenkante und eine bogenförmige Außenkante aufweist;
Erzeugen des Aufbaus für den Halbleitermaterialwafer durch Anordnen der Bogensegmente nahe aneinander,
Vorsehen einer Sägelinienbreite zwischen den Bogensegmenten;
wobei mehrere der zwei oder mehr Bogensegmente der Ringgestaltung im Allgemeinen in Spalten (1207) angeordnet werden; und wobei die bogenförmige Innenkante und die bogenförmige Außenkante von jedem Bogensegment bogenförmig zusammengepasst werden.

3. Verfahren nach einem der Ansprüche 1 oder 2, wobei die zwei oder mehr Bogensegmente im Allgemeinen dieselbe Form aufweisen.

4. Verfahren nach einem der Ansprüche 2 oder 3, wenn von Anspruch 2 abhängig, wobei die Bogensegmente der Ringgestaltung im Allgemeinen in ineinandergreifenden Spalten (1305A) angeordnet werden.

5. Verfahren nach einem der vorhergehenden Ansprüche, wobei mindestens ein Abschnitt von einem Bogensegment nahe der bogenförmigen Innenkante eines anderen Bogensegments angeordnet wird.

6. Verfahren nach einem der vorhergehenden Ansprüche, wobei der intakte Ring in zwei Ringsegmentgestaltungen aufgeteilt wird.

7. Verfahren nach Anspruch 6, wenn von Anspruch 1 abhängig, wobei der Scheitel der konvexen Außenkanten von zwei Ringsegmenten, die nahe der Mitte des Wafers angeordnet sind, zur Außenseite des Wafers hin gerichtet ist.

8. Verfahren nach Anspruch 1, wobei der intakte Ring in drei Ringsegmente aufgeteilt wird.

9. Verfahren nach Anspruch 8, wobei drei Segmente der mehreren aufgeteilten intakten Ringe nahe der Mitte des Wafers mit konzentrischen Kreisen von Bogensegmenten um die drei Segmente der mehreren aufgeteilten intakten Ringe angeordnet sind.

10. Verfahren nach Anspruch 1, wobei der intakte Ring in vier Ringsegmentgestaltungen aufgeteilt wird.

11. Verfahren nach Anspruch 2, wobei die Spalten mit einer der Kanten jeden Bogensegments in Eingriff gebracht werden.

12. Verfahren nach einem der vorhergehenden Ansprüche, wobei eines oder mehr der Ringsegmente eine Krümmung beinhalten, die zum Zusammenpassen des äußeren Bogens des vollständig bogenförmig zusammengepassten Ringsegments mit bogenförmig zusammengepassten Enden gestaltet ist.

13. Verfahren nach Anspruch 2, wobei eines oder beide Enden des einen oder mehr Ringsegmente Enden beinhalten, die zum Ermöglichen des Ineinandergreifens von Spalten von Bogensegmenten auf einem Wafer gestaltet sind.

14. Halbleiterwafer (901, 1201), aufweisend:
einen Aufbau von Bogensegmenten (902, 1202) nahe aneinander auf dem Halbleiterwafer, wobei mindestens ein Abschnitt von jedem Bogensegment eine bogenförmige Innenkante und eine bogenförmige Außenkante aufweist und wobei zwei oder mehr Bogensegmente eine Ringplättchenkomponente ausbilden; und
wobei der Aufbau eine Sägelinienbreite zwischen den Bogensegmenten aufweist;
wobei mehrere der zwei oder mehr Bogensegmente der Ringgestaltung im Allgemeinen in konzentrischen Bändern (905) angeordnet sind, oder wobei zwei oder mehr Bogensegmente der Ringgestaltung im Allgemeinen in Spalten (1207) angeordnet sind;
und wobei die bogenförmige Innenkante und die bogenförmige Außenkante von jedem Bogensegment bogenförmig zusammengepasst sind.

## Revendications

1. Procédé consistant à générer un agencement destiné à optimiser l'utilisation d'une tranche de matériau semi-conducteur (901) pour un composant sur puce d'une lentille ophtalmique, le procédé comprenant les étapes suivantes :
diviser des motifs d'anneau intact de composants sur puce en au moins deux segments d'arc (902), au moins une partie de chaque segment d'arc comprenant un bord interne arqué et un bord externe arqué ;
générer l'agencement pour la tranche de matériau semi-conducteur en disposant les segments d'arc à proximité les uns des autres,
prévoir une largeur de trait de coupe entre les segments d'arc ;
dans lequel une multiplicité des au moins deux segments d'arc du motif d'anneau sont généralement positionnés en bandes concentriques ; et dans lequel le bord interne arqué et le bord externe arqué de chaque segment d'arc sont mis en correspondance d'arc.

2. Procédé consistant à générer un agencement destiné à optimiser l'utilisation d'une tranche de matériau semi-conducteur (1201) pour un composant sur puce d'une lentille ophtalmique, le procédé comprenant les étapes suivantes :
diviser des motifs d'anneau intact de composants sur puce en au moins deux segments d'arc (1202), au moins une partie de chaque segment d'arc comprenant un bord interne arqué et un bord externe arqué ;
générer l'agencement pour la tranche de matériau semi-conducteur en disposant les segments d'arc à proximité les uns des autres,
prévoir une largeur de trait de coupe entre les segments d'arc ;
dans lequel les au moins deux segments d'arc du motif d'anneau sont généralement positionnés en colonnes (1207) ;
et dans lequel le bord interne arqué et le bord externe arqué de chaque segment d'arc sont mis en correspondance d'arc.

3. Procédé de l'une quelconque des revendications 1 ou 2, dans lequel les au moins deux segments d'arc sont généralement de la même forme.

4. Procédé de l'une quelconque des revendications 2 ou 3 lorsqu'elle est dépendante de la revendication 2, dans lequel les segments d'arc du motif d'anneau sont généralement positionnés en colonnes interdigitées (1305A).

5. Procédé d'une quelconque revendication précédente, dans lequel au moins une partie d'un segment d'arc est positionnée près du bord intérieur arqué d'un autre segment d'arc.

6. Procédé d'une quelconque revendication précédente, dans lequel l'anneau intact est divisé en deux motifs de segment d'anneau.

7. Procédé de la revendication 6 lorsqu'elle est dépendante de la revendication 1, dans lequel les sommets des bords extérieurs convexes de deux segments d'anneau placés près du centre de la tranche sont tournés vers l'extérieur de la tranche.

8. Procédé de la revendication 1, dans lequel l'anneau intact est divisé en trois segments d'anneau.

9. Procédé de la revendication 8, dans lequel trois segments des multiples anneaux intacts divisés sont positionnés près du centre de la tranche avec des cercles concentriques de segments d'arc autour des trois segments des multiples anneaux intacts divisés.

10. Procédé de la revendication 1, dans lequel l'anneau intact est divisé en quatre motifs de segment d'anneau.

11. Procédé de la revendication 2, dans lequel les colonnes sont interdigitées avec un des bords de chaque d'arc.

12. Procédé d'une quelconque revendication précédente, dans lequel un ou plusieurs des segments d'anneau comportent une courbure conçue pour épouser l'arc externe du segment d'anneau en correspondance d'arc complète avec des extrémités en correspondance d'arc.

13. Procédé de la revendication 2, dans lequel une extrémité ou les deux du ou des segments comportent des extrémités conçues pour permettre l'interdigitation de colonnes de segments d'arc sur une tranche.

14. Tranche de semi-conducteur (901, 1201) comprenant :
un agencement de segments d'arc (902, 1202) à proximité les uns des autres sur la tranche de semi-conducteur, au moins une partie de chaque segment d'arc comprenant un bord interne arqué et un bord externe arqué et au moins deux segments d'arc formant un composant sur puce annulaire ; et
dans laquelle l'agencement comprend une largeur de trait de coupe entre les segments d'arc ;
dans laquelle une multiplicité des au moins deux segments d'arc du motif d'anneau sont généralement positionnés en bandes concentriques (905) ou dans laquelle les au moins deux segments d'arc du motif d'anneau sont généralement positionnés en colonnes (1207) ;
et dans laquelle le bord interne arqué et le bord externe arqué de chaque segment d'arc sont mis en correspondance d'arc.
